# EUROPEAN PATENT APPLICATION

(11) **EP 3 852 490 A1**
(43) Date of publication of application: **21.07.2021**
(21) Application number: 18933585.4
(22) Date of filing: 14.09.2018
(51) Int. Cl.: H04W 92/20, H04B 7/15, H04W 40/34

(54) **WIRELESS COMMUNICATION DEVICE AND WIRELESS COMMUNICATION METHOD**

(71) Applicant: NTT DoCoMo, Inc., Tokyo 100-6150 (JP)
(72) Inventor: HARADA, Hiroki, Tokyo 100-6150 (JP)
(74) Representative: Hoffmann Eitle
(86) International application number: PCT/JP2018/034304
(87) International publication number: WO 2020/054077

(57) **Abstract**

According to one aspect of the present disclosure, a radio backhaul can be appropriately detected and measured. A radio communication apparatus includes a receiving unit that receives a first signal periodically transmitted from a first node connected to the radio communication apparatus via a radio backhaul link and a second node not connected to the radio communication apparatus, and receives a second signal at a timing different from that of the first signal, and a control unit that determines a candidate of a switching destination of the radio backhaul link based on the first signal and switches the radio backhaul link based on the second signal.

## Description

### Technical Field

The present disclosure relates to a radio communication apparatus and a radio communication method in next-generation mobile communication systems.

### Background Art

In the universal mobile telecommunications system (UMTS) network, the specifications of long-term evolution (LTE) have been drafted for the purpose of further increasing high speed data rates, providing lower delays, and the like (see Non-Patent Literature 1). In addition, the specifications of LTE-Advanced (LTE-A, LTE Rel. 10-14) have been drafted for the purpose of further increasing the capacity, sophistication, and the like of LTE (LTE Rel. 8, 9) .

Successor systems of LTE (for example, future radio access (FRA), 5th generation mobile communication system (5G), 5G+ (plus), New Radio (NR), new radio access (NX), future generation radio access (FX), LTE Rel. 15 or later versions, and so on) are also under study.

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (for example, NR), the use of integrated access backhaul (IAB) technology that uses NR communication as a backhaul between base stations (or between a base station and a relay station) is under study. In particular, it is expected that IAB using NR communication using millimeter waves can expand the coverage area at low cost.

In NR, methods for an IAB node to discover (detect) other nodes is under study. It is studied to perform the node discovery based on, for example, synchronization signal/broadcast channel (synchronization signal/physical broadcast channel (SS/PBCH)) block or a channel state information reference signal (CSI-RS). Here, the SS/PBCH block may be referred to as a synchronous signal block (SSB) .

However, in studies of NR so far, it is not clear how the signal for detecting and measuring the radio backhaul is transmitted. If the signal cannot be used properly, it may cause a decrease in communication throughput, and the like.

Therefore, one of the objects of the present disclosure is to provide a radio communication apparatus and a radio communication method for appropriately detecting and measuring a radio backhaul.

### Solution to Problem

A radio communication apparatus according to one aspect of the present disclosure includes a receiving unit that receives a first signal periodically transmitted from a first node connected to the radio communication apparatus via a radio backhaul link and a second node not connected to the radio communication apparatus, and receives a second signal at a timing different from that of the first signal, and a control unit that determines a candidate of a switching destination of the radio backhaul link based on the first signal and switches the radio backhaul link based on the second signal.

### Advantageous Effects of Invention

According to one aspect of the present disclosure, a radio backhaul can be appropriately detected and measured.

### Brief Description of Drawings

Fig. 1 is a diagram illustrating an example of a configuration of an IAB.
Fig. 2 is a diagram illustrating an example of BH detection.
Fig. 3 is a diagram illustrating an example of BH measurement.
Fig. 4 is a diagram illustrating an example of transmission timings of a detection RS and a measurement RS.
Fig. 5 is a diagram illustrating an example of a schematic configuration of a radio communication system according to one embodiment.
Fig. 6 is a diagram illustrating an example of an overall configuration of a base station according to one embodiment.
Fig. 7 is a diagram illustrating an example of a functional configuration of the base station according to one embodiment.
Fig. 8 is a diagram illustrating an example of an overall configuration of a user terminal according to one embodiment.
Fig. 9 is a diagram illustrating an example of a functional configuration of the user terminal according to one embodiment.
Fig. 10 is a diagram illustrating an example of a hardware configuration of the base station and the user terminal according to one embodiment.

### Description of Embodiments

### (IAB node)

The use of integrated access backhaul (IAB) technology, which uses NR communication as a backhaul between base stations (or between a base station and a relay station), is under study. In particular, it is expected that IAB using NR communication using millimeter waves can expand the coverage area at low cost.

An IAB node may have at least one function such as Distribution Unit (DU), Central Unit (CU), Mobile Termination (MT), or the like. Therefore, the IAB node may function as a base station or as a user terminal (User Equipment (UE)).

Note that the IAB may be called a radio backhaul or the like. A links between nodes using the IAB may be referred to as a backhaul (BH) link. A link between the IAB node and the UE may be referred to as an access link. The IAB node may use communication using NR for the backhaul link. The IAB node may use communication using NR for the access link, or may use communication based on another radio access technology (RAT).

With the introduction of the IAB, base stations can use the same frequency for backhaul and UE access simultaneously or by switching, and thus it is expected to improve frequency utilization efficiency, for example. For example, a backhaul link and an access link may be multiplexed using at least one of time division multiplexing (TDM), frequency division multiplexing (FDM), or space division multiplexing (SDM).

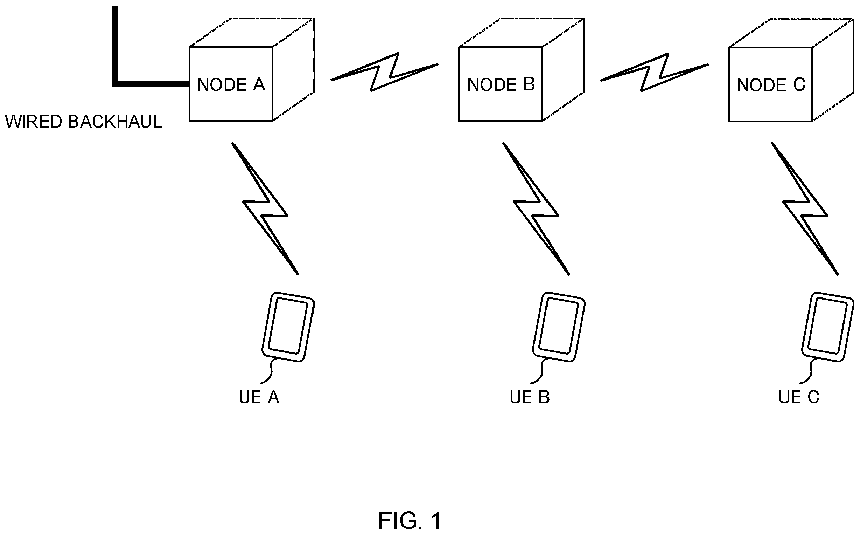

Fig. 1 is a diagram illustrating an example of a configuration of the IAB. In this example, three nodes (network nodes) A to C are illustrated. The node A is connected to a core network via a wired backhaul (for example, an optical fiber network). A node connected to the core network via a wired backhaul may be referred to as an IAB donor.

An upper IAB node or IAB donor may be referred to as a parent IAB node, a parent node, an upper node, an upper IAB node, and the like. A lower IAB node may be referred to as a child IAB node, a child node, a lower node, and the like. Here, the "upper" may mean that it is closer to at least one of a base station (for example, gNB), a wired backhaul, a core network, or the like (the number of hops is small). Hereinafter, a network node including the IAB node and the IAB donor may be simply referred to as a node.

For example, in the example of Fig. 1, the node A is the parent node of the node B and the node B is the parent node of the node C. Thus, the IAB may include a plurality of backhaul hops. In addition, the nodes A to C can communicate with the UEs A to C, respectively, via access links.

When a certain node has the function of an upper node, the node can accommodate a lower IAB node (connect to the lower IAB node via a BH link) and can accommodate a UE (connect to the UE via an access link). The upper node may perform scheduling of the lower IAB node, or may control transmission or reception of the lower IAB node.

When a certain IAB node does not have the function of an upper node (for example, supporting operation as a base station), the IAB node cannot accommodate the lower IAB node and can accommodate only the UE.

### (Discovery of node)

In NR, a method for an IAB node to discover another node (IAB node or IAB donor) (inter-IAB node discovery) is under study. The inter-IAB node discovery may be referred to as IAB node discovery, IAB node detection, IAB node discovery after initial access, and the like.

It is studied to perform the IAB node discovery based on, for example, at least one of synchronization signal/broadcast channel (synchronization signal/physical broadcast channel (SS/PBCH)) block, a channel state information reference signal (CSI-RS), or another reference signal. Here, the SS/PBCH block may be referred to as a synchronous signal block (SSB).

The IAB node before the start of operation (inactive IAB node DU, IAB node that has not yet connected to another node) may receive an SSB from another node in a resource specified in the specifications similarly to the UE, and may connect to the other node by making an initial access based on the received SSB.

In order for the IAB node after the start of operation (IAB node DU after activation, IAB node after connecting to another node) to detect at least one of a candidate node or a candidate beam as a switching destination, it is studied to perform at least one of the following methods 1, 2.

### (Method 1) SSB-based IAB node discovery

The IAB node may use the SSB to discover the IAB node. The IAB node may perform at least one of the following methods 1-A, 1-B.

### ((Method 1-A))

The SSB received by the IAB node (SSB for IAB node) may be an SSB (SSB received by UE, SSB for UE) transmitted by another node for UE (access UE, a UE that is not an IAB node and may be simply referred to as a UE or the like).

Each IAB node must transmit the SSB for UE and cannot perform reception at the same frequency during SSB transmission (half duplex). Thus, a transmission timing of the SSB for IAB node may be different among the plurality of nodes. The transmission timing of the SSB for IAB node may be different from the transmission timing of the SSB for UE. For example, each node may be configured with a part of non-transmission SSB (muting pattern). Consequently, each node can receive the SSB from other nodes in a resource that does not transmit the SSB.

### ((Method 1-B))

The SSB for IAB node may be transmitted using a resource different from the SSB for UE (a resource orthogonal to the time-frequency resource of the SSB for UE, a time-frequency resource of the SSB for UE, and a resource to which at least one of FDM or TDM is applied).

Each IAB node cannot perform reception at the same frequency during transmission of SSB (half duplex). Thus, the transmission timing of the SSB for IAB node may be different among the plurality of nodes. The transmission timing of the SSB for IAB node may be different from the transmission timing of the SSB for UE. For example, each node may be configured with a different muting pattern. Consequently, each node can receive the SSB from other nodes in a resource that does not transmit the SSB.

### (Method 2) CSI-RS-based IAB node discovery

The IAB node may use CSI-RS to discover the IAB node. CSI-RS-based IAB node discovery may be expected to be used in synchronous network operations (for example, when IAB nodes are synchronized).

Each IAB node cannot receive at the same frequency during CSI-RS transmission (half duplex). Thus, the transmission timing of the CSI-RS (CSI-RS for IAB node) to be received by the IAB node may be different among the plurality of nodes. For example, each node may be configured with a different CSI-RS resource. Thus, the IAB node can receive the CSI-RS from other nodes in a resource that does not transmit the CSI-RS.

At least one of the SSB for UE or the CSI-RS for UE (CSI-RS received by UE) may be referred to as RS for UE. At least one of the SSB for IAB node or the CSI-RS for IAB node may be referred to as RS for IAB node.

Furthermore, expansion of measurement configuration information (measurement timing configuration information (for example, SSB measurement timing configuration (SMTC)), measurement resource configuration information (for example, CSI-RS configuration information)), cooperation between nodes (for example, configuration of muting pattern), aperiodic transmission of SSB or CSI-RS, and the like are under study.

Furthermore, for the IAB node after the start of operation to measure the quality of a BH (IAB) link, it is studied to support both of SSB-based measurement (for example, measurement of at least one of reference signal received power (RSRP), reference signal received quality (RSRQ), or signal to interference plus noise ratio (SINR)) and a CSI-RS based measurement (for example, measurement of at least one of RSRP, RSRQ, SINR).

The RS (reference signal, SSB or CSI-RS, RS for UE) used for existing (for example, Rel-15) UEs for radio resource management (RRM) measurement or mobility is configured and transmitted as an RS for both detection of a node (cell) and measurement of a channel. That is, the RS for UE is used without distinguishing between detection and measurement.

If an RS for IAB node is configured and transmitted for both IAB node detection and BH link measurement, the following problems can occur.

Since it is studied that the IAB node does not move unlike the UE, it is conceivable to make the transmission period of the RS for IAB node longer than the period of the RS for UE (mobility, access link). There may occur a case where a newly installed IAB nodes can provide better quality than the connected parent node, a case where the path changes due to building construction or demolition, or the like, and thus it is preferable that the node periodically transmits the RS for IAB node using all beams. If the node transmits RS for IAB node using all the beams in a short transmission period, there is a problem that the overhead becomes large.

The IAB node uses the RS for IAB node to detect node and beam candidates that can be used as switching destinations of a BH link, and when a failure of the BH link occurs, it is conceivable to measure candidates using the RS for IAB node and determine the switching destination from the candidates.

If the transmission period of the RS for IAB node is made long as described above, it is conceivable that the measurement required to determine the switching destination will be delayed if a failure of the BH link occurs. For example, it takes a long time from disconnection of the BH link (for example, shielding or blocking) to the determination of the candidate to be used, and thus there is a problem that a non-communicable time of the UE (time from the disconnection to recovery of the BH link) subordinate to the node becomes long.

However, it is not clear how the RS is transmitted for the detection and measurement of BH link candidates. If the IAB node cannot use the RS properly, it may lead to a decrease in system performance such as an increase in overhead and an increase in the non-communicable time of the UE, or the like.

Therefore, the present inventor has conceived to configure an RS for detecting BH (BH link candidate) and an RS for measuring BH (at least one of BH link or BH link candidate) in the IAB node.

Hereinafter, embodiments according to the present disclosure will be described in detail with reference to the drawings. The radio communication method according to each of the embodiments may be applied independently, or may be applied in combination with others.

### (Radio Communication Method)

### <Configuration method for detection RS and measurement RS>

The IAB node may be configured separately for BH detection using a signal for BH detection (detection signal, detection RS) and BH measurement using a signal for BH measurement (measurement signal, measurement RS). The BH detection may be detection of at least one of a BH link (BH to which the IAB node is connected) or a BH link candidate (BH to which the IAB node is not connected). The BH measurement may be measurement of at least one of the BH link or the BH link candidate.

The IAB node may perform BH detection on the parent node connected to the IAB, or may perform BH detection on another node (peripheral node) other than the parent node. In addition, the IAB node may perform BH measurement for the parent node or BH measurement for the peripheral node.

To the IAB node, configuration information for detecting a detection RS (detection RS configuration information) and configuration information for measuring a measurement RS (measurement RS configuration information) may be reported (configured) from the network (for example, the parent node, higher station apparatus).

Between the detection RS and the measurement RS, the value of at least one parameter of the RS type (for example, SSB, CSI-RS), the RS measurement timing (for example, the period of a measurement window, the offset of the measurement window, the time length of the measurement window), or the RS measurement target resource (for example, SSB index, CSI-RS resource index) may be different.

At least one of a configurable value of parameter (candidate value, range) and the configurable maximum number of parameters may differ between the detection RS and the measurement RS. For example, the candidate value of the period of the detection RS may include a value larger than the candidate value of the period of the measurement RS. For example, the upper limit of the range of the detection RS period (measurement period or transmission period) may be larger than the upper limit of the range of the measurement RS period (measurement period or transmission period). For example, the maximum number of measurement target resources of the detection RS may be larger than the maximum number of measurement target resources of the measurement RS.

The detection RS configuration information may include at least one of a detection RS type (for example, SSB, CSI-RS), a measurement target resource of detection RS (for example, ReferenceSignalConfig), or a measurement timing of detection RS (for example, SSB measurement timing configuration (SSB-MTC)). The detection RS configuration information may indicate a set (list) of detection RS (index). The detection RSs in the set may be linked with a different beam (spatial domain filters, QCL, TCI, or the like).

To the IAB node, the measurement RS configuration information may be reported as an information element separate from the detection RS configuration information. The measurement RS configuration information may include at least one of a measurement RS type, a measurement target resource of measurement RS, and a measurement timing of measurement RS. The measurement RS configuration information may indicate a set (list) of measurement RSs (index). The measurement RSs in the set may be linked with a different beam (spatial domain filters, QCL, TCI, or the like).

The IAB node may handle the measurement RS in at least one of RRM, radio link monitoring (RLM), or beam failure recovery (BFR). For example, to the IAB node, the measurement RS configuration information may be reported as at least one configuration information of RS for RRM, RS for RLM, RS for beam failure detection (BFD), or RS for candidate beam detection. At least one measurement target of RRM, RLM, BFR may include a parent node or a peripheral node. Further, the RS configured as at least one of RS for RLM, RS for BFD, or candidate beam detection RS may include the measurement RS transmitted from the parent node, or the measurement RS transmitted from the peripheral node.

The IAB node may be configured with BH measurement according to one of the following configuration methods 1 and 2.

### (Configuration method 1)

When the IAB node is configured with BH measurement as RRM measurement, the measurement RS configuration information (for example, measurement target configuration information (MeasObject)) may be reported to the IAB node separately from the detection RS configuration information (for example, measurement target configuration information (MeasObject)). For example, the IAB node may be configure with the measurement RS separately from the detection RS, or may be configured with the measurement timing (measurement window) of the measurement RS separately from the measurement timing (measurement window) of the detection RS.

The measurement RS may be reported by the RS for RLM (for example, RLM-RS configuration information (RadioLink Monitoring RS)) included in the RLM configuration information.

The IAB node may report a measurement result (measurement report) of the measurement RS to the parent node. The parent node receives a measurement result of BH link and a measurement result of BH link candidate (a peripheral node and a beam of the peripheral node) of a switching destination and, even if the BH link is connected, may transmit an instruction of BH link to a child node when it is determined that the measurement result of the switching destination candidate is more appropriate than the measurement result of the BH link (for example, when the measurement result of the BH link is not the best, or when the measurement result of the BH link is lower than a given cutting threshold and the measurement result of the switching destination candidate is higher than a given connection threshold).

If the BH link is broken (for example, if the child node detects by RLM that the quality of the BH link has deteriorated), the child node may perform a connection process (for example, BFR) to another beam of the parent node, or may perform a connection process (for example, initial access) on the BH link candidate of the peripheral node.

When the child node switches the BH link to another beam of the parent node, the child node may perform contention-free random access (CFRA) by a recovery request. When the child node switches the BH link from the parent node to the peripheral node, the child node may use contention-based random access (CBRA) to perform initial access to the peripheral node of the switching destination.

### (Configuration method 2)

When the IAB node is configured with BH measurement as BFR, the measurement RS configuration information (for example, BFR configuration information (BeamFailureRecoveryConfig)) that uses at least one of the RS for BFD or the candidate beam detection RS as the measurement RS may be reported to the IAB node separately from the detection RS configuration information. For example, the IAB node may be configured with at least one of the RS for BFD or the candidate beam detection RS separately from the detection RS, and may be configured with the measurement timing (measurement window) of at least one of the RS for BFD or the candidate beam detection RS separately from the measurement timing (measurement window) of the detection RS.

The measurement RS may be reported by configuration information of the candidate beam detection RS included in the BFR configuration information (for example, candidate beam RS configuration information (candidateBeamRSList)). The candidate beam RS configuration information may be a list of RSs that identify candidate beams for BFRs and random access parameters linked therewith. The candidate beam RS configuration information may include a candidate beam detection RS transmitted from the parent node, or may include a candidate beam detection RS transmitted from a peripheral node. The candidate beam RS configuration information may include an index of the candidate beam detection RS and information of a physical random access channel (PRACH) resource. Information of the PRACH resource may indicate at least one of a random access preamble or a random access occasion.

When a child node detects a deterioration in quality of the BH link (for example, if the child node detects that the quality of the BH link has deteriorated by the RS for BFD from the parent node), the IAB node may select the candidate beam detection RS that is appropriate (for example, the measurement result satisfies a given condition) from among candidate beam detection RSs (at least one of the candidate beam detection RS from the parent node or the candidate beam detection RS from the peripheral node), and may transmit a recovery request. The recovery request may be a PRACH linked with the selected candidate beam detection RS. Thus, the node that has received the PRACH can determine the node and beam associated with the PRACH as the switching destination of the BH link.

When the child node switches the BH link to another beam of the parent node, the child node may perform contention-free random access (CFRA) by a recovery request. When the child node switches the BH link from the parent node to the peripheral node, the child node may use contention-based random access (CBRA) to perform initial access to the peripheral node of the switching destination.

Information element (at least one of the name, type, or structure of information element) included in at least one of the detection RS configuration information or the measurement RS configuration information may be the same as information element included in configuration information for UE (for example, MeasObject, RadioLinkMonitoringConfig, BeamFailureRecoveryConfig, or the like), or an information element different from the information element for UE may be specified.

The parent node may report individual configuration information of at least one of the detection RS configuration information or the measurement RS configuration information to the child node.

The detection RS configuration information may include configuration information of detection RS transmitted from the parent node, or may include configuration information of detection RS transmitted from at least one peripheral node. The measurement RS configuration information may include configuration information of measurement RS transmitted from the parent node, or may include configuration information of measurement RS transmitted from at least one peripheral node.

One measurement window configured by the detection RS configuration information may include the transmission timing of the detection RS transmitted from the parent node, may include the transmission timing of the detection RS transmitted from at least one peripheral node, or may include both the transmission timing of the detection RS transmitted from the parent node and the transmission timing of the detection RS transmitted from at least one peripheral node.

One measurement window configured by the measurement RS configuration information may include the transmission timing of the measurement RS transmitted from the parent node, may include the transmission timing of the measurement RS transmitted from at least one peripheral node, or may include both the transmission timing of the measurement RS transmitted from the parent node and the transmission timing of the measurement RS transmitted from at least one peripheral node.

Each node may broadcast at least one configuration information of the detection RS configuration information or the measurement RS configuration information. The IAB node may use the configuration information broadcast from at least one node for at least one of BH detection or BH measurement.

The detection RS and the measurement RS may be transmitted by a node having a function of an upper node (a node to which a child node can be connected) or may be transmitted by any node. Further, the detection RS and the measurement RS may be received by an IAB node that does not have the function of the upper node, or may be received by any IAB node.

The node may be configured from the network with at least one of configuration information for transmitting the detection RS and configuration information for transmitting the measurement RS. In each node, the transmission resource of the detection RS, the transmission resource of the measurement RS, and the transmission resource of the RS for UE may be different from each other (or orthogonal to each other).

### <Method of determining measurement RS>

The child node may report (notify) information (detection information) regarding a detected RS to at least one of the parent node or the peripheral node, according to detection of the detection RS. The detection information may include at least one of cell ID, the resource of the detected detection RS (for example, SSB index, CSI-RS index), or detection intensity (for example, RSRP).

The child node may report information regarding an RS whose detection intensity is equal to or higher than a given value among detection RSs, may report information regarding a given number of RSs among detection RSs in descending order of detection intensity, or may report information regarding all the configured detection RSs.

The parent node may determine an RS that satisfies a measurement RS condition among the detection RSs indicated in the received detection information as the measurement RS (measurement RS set). The measurement RS condition may be that it is transmitted from the own node, that the detection intensity is equal to or higher than a given value, or that the number of RSs is a given number in descending order of detection intensity.

Therefore, the number of measurement RSs can be smaller than the number of detection RSs.

The child node may explicitly or implicitly report another node of the detection information.

For example, a UL resource (transmission resource to other nodes, for example, a random access preamble, a random access resource, or the like) is linked with the RS resource configured in each cell, and the child node may perform, using the UL resource corresponding to the detected RS, UL transmission (transmission to another node, for example, PRACH) to thereby implicitly report at least one of the cell ID corresponding to the detected RS or the resource ID of the detected RS to the other node. A node that has received the UL transmission may recognize that at least one of the cell (node) or the RS (beam) can be used for the BH link (can be received by the node that made the UL transmission) based on the UL resource.

The parent node may report to the peripheral node at least one of detection information regarding the RS detected by the own node (own node detection information) or detection information received from the child node (child node detection information). The child node detection information may include detection information regarding RS transmitted from the own node and detected by the child node, or may include detection information regarding RS transmitted from the peripheral node and detected by the child node.

The parent node may transmit detection information to the peripheral node via a radio backhaul. If the parent node is an IAB donor, detection information may be transmitted to other IAB donors (core networks) via a wired backhaul.

The peripheral node may determine an RS that satisfies a measurement RS condition among the detection RSs indicated in the received detection information as the measurement RS (measurement RS set). The measurement RS condition may be that it is transmitted from the own node, that the detection intensity is equal to or higher than a given value, or that the number of RSs is a given number in descending order of detection intensity.

Thus, the peripheral node can appropriately determine the measurement RS for a node that is not connected to the own node.

Each of the parent node and the peripheral node may transmit the measurement RS by using the beam corresponding to the measurement RS (measurement beam).

The parent node may transmit the detection information from the child node to the upper node (network), and the upper node may determine the measurement RS of the lower node based on the detection information from the lower node, and may configure the lower node with the measurement RS.

The detection information may be a request (trigger) for aperiodic transmission or semi-persistent transmission of the measurement RS. Upon receiving the detection information, the IAB node may transmit the measurement RS based on the detection information only when the RS indicated in the detection information includes the detection RS of the own node. In this case, the IAB node may transmit the measurement RS only once, transmit the measurement RS according to a measurement RS transmission period over a given time, transmit the measurement RS according to the measurement RS transmission period until the transmission timing of the next detection RS, transmit the measurement RS according to the measurement RS transmission period until another detection information is received, or transmit the measurement RS according to the measurement RS transmission period until an instruction to stop transmission (deactivation) is received.

The child node may assume that the measurement RS does not include RS that is not reported by the detection information.

The parent node may transmit a BH link switching instruction (trigger) to the child node to instruct switching of the BH link. The parent node may transmit a BH link switching instruction together with at least one of the detection RS or the measurement RS, or transmit the BH link switching instruction at a timing different from that of the detection RS and the measurement RS.

The parent node may transmit a BH link switching instruction to the child node when a given switching instruction condition is satisfied. The switching instruction condition may be that the BH link between the parent node and the child node is broken. In this case, the trigger of the parent node may switch the parent node or the beam, or the trigger of the child node may switch the parent node or the beam. Further, the switching instruction condition may be that the parent node determines that the quality of the BH link is lower than a given value based on a measurement result from the child node. Further, the switching instruction condition may be a case where a resource utilization rate (load) of the parent node exceeds a given value. In this case, since the traffic of the parent node has increased, the parent node reduces the number of child nodes it accommodates.

### <Specific example>

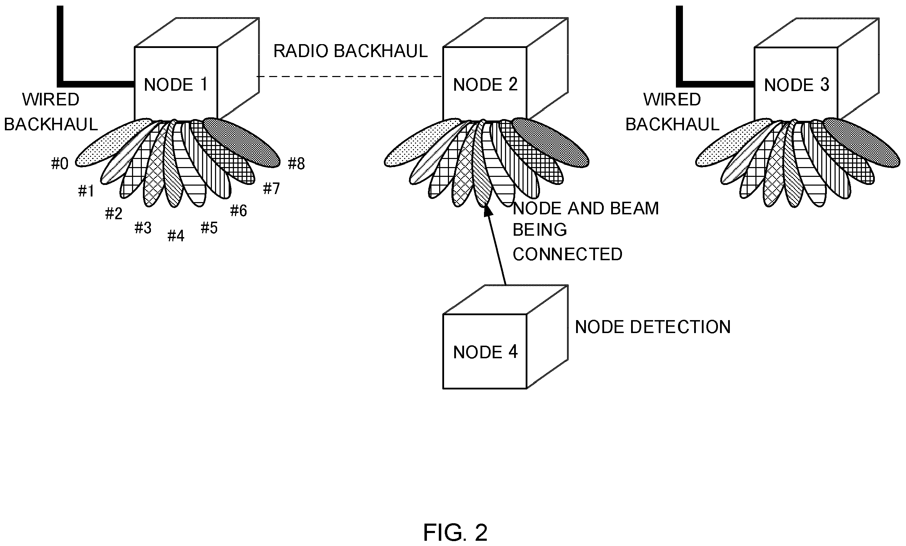

In the example of Fig. 2, a node 1 is an IAB donor connected to a core network via a wired backhaul. A node 2 is an IAB node connected to the node 1 via a radio backhaul. A node 3 is an IAB donor connected to the core network via the wired backhaul. A node 4 is an IAB node connected to the node 3 via the radio backhaul.

Each of the nodes 1, 2, 3, 4 transmits a set of detection RSs (first signals) at different timings according to a detection RS transmission period. Detection RSs #0 to 8 in one set are linked with different beams. Each node transmits each detection RS in the set of detection RSs using a corresponding beam.

The node 4 detects available nodes and beams by receiving a detection RS transmitted from another node in preparation for failure of at least one of the node 2 that is the parent node or the beam of the node 2 (connection beam) that is used to connect to the node 4. An available beam may be a beam whose measurement result satisfies a given condition. The given condition may be that a measurement result (received power, reception quality, or the like) is equal to or higher than a given value, or that the measurement result is up to a given number in descending order of measurement results.

It is assumed that the node 4 detects the detection RSs (beams) #6, #7, #8 of the node 1, the detection RSs (beams) #3, #4, #5 of the node 2, and the detection RSs (beams) #1, #2 of the node 3. Node #4 reports a detection result including the detected nodes and beams to the node 2. The node 2 reports the detection result to the nodes 1, 3.

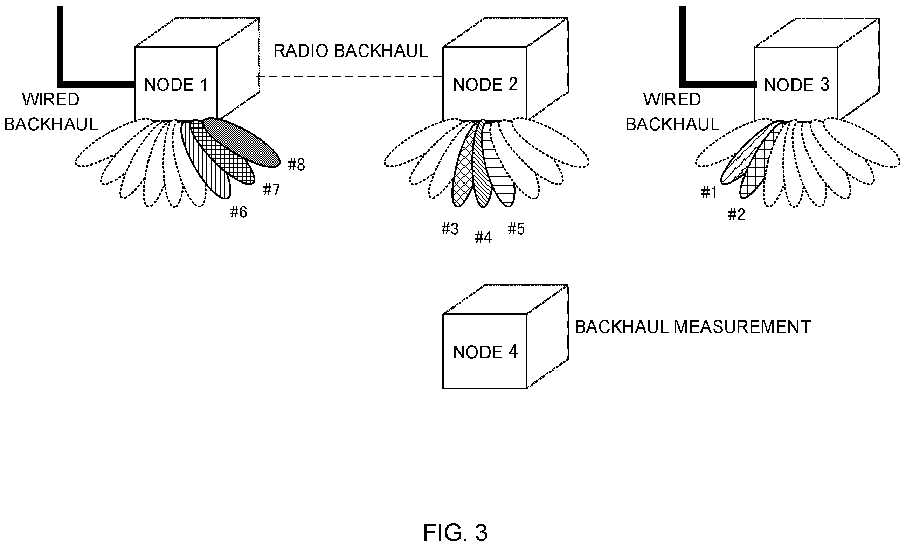

In the example of Fig. 3, the node 1 transmits the detection RSs #6, #7, #8 as a set of measurement RSs based on the detection result, the node 2 transmits the detection RSs #3, #4, #5 as measurement RSs based on the detection result, and the node 3 transmits the detection RSs #1, #2 as measurement RSs based on the detection result. Each node transmits each measurement RS in the set of measurement RSs using a corresponding beam.

When the switching condition is satisfied, the node 4 measures the measurement RS, determines a node and a beam as a switching destination of the BH link based on the measurement result, and switches the BH link to the switching destination. The switching condition may be that a failure of the BH link has occurred (the BH link has been disconnected), that the measurement result of the BH link has fallen below a given value, or that the node 4 has received an instruction from the parent node.

According to this operation, the node 4 does not need to measure all the beams of the nodes 1, 2, 3 after a failure of the BH link occurs, and thus the time and load from a failure to switching can be reduced.

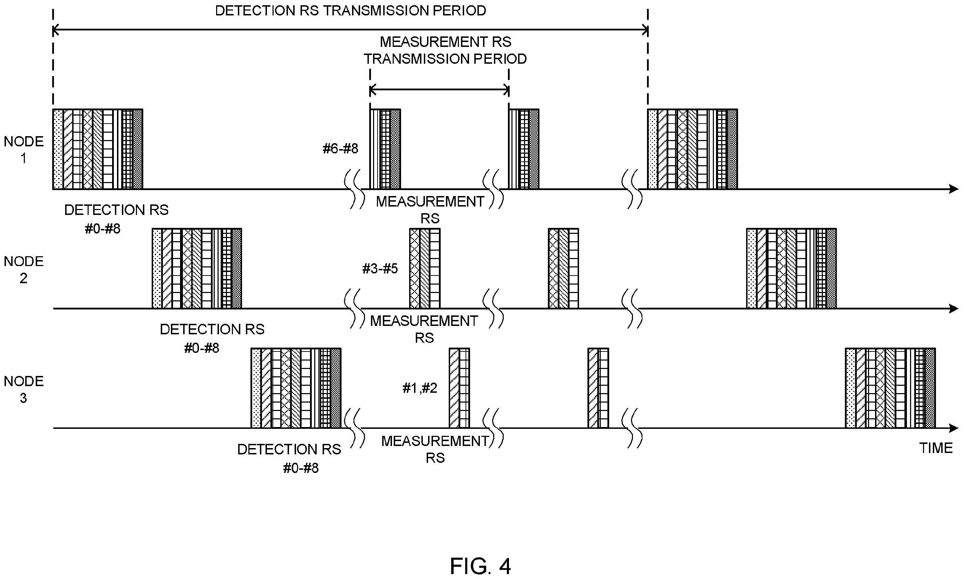

In the example of Fig. 4, the nodes 1, 2, 3 transmits the detection RSs #0 to #8 using the corresponding beam at the same detection RS transmission period and different transmission timings (for example, offsets) from each other as in Fig. 2 described above. Furthermore, the nodes 1, 2, 3 may transmit the measurement RSs using the corresponding beam at the same measurement RS transmission period and different transmission timings (for example, offsets) from each other as in Fig. 3 described above.

Thus, each node can transmit the detection RS and the measurement RS of the own node and receive the detection RS and the measurement RS of the other node at the same frequency (half duplex).

The measurement RS transmission period may be shorter than the detection RS transmission period. Thus, the node 4 can measure the measurement RS in a shorter time than the detection RS after a failure of the BH link occurs, and thus the node 4 can suppress the time from the failure to switching as compared with a case where the detection RS and the measurement RS are shared. Further, since the transmission time of the set of measurement RSs is shorter than the transmission time of the set of detection RSs, it is possible to suppress an increase in overhead due to making the measurement RS transmission period shorter than the detection RS transmission period.

The measurement period of the measurement RS may be shorter than the measurement period of the detection RS.

Furthermore, each node may transmit the RS for UE at a transmission timing different from that of the detection RS and the measurement RS. The detection RS transmission period may be longer than the transmission period of the RS for UE. The measurement period of the detection RS may be longer than the measurement period of the RS for UE.

Messages between nodes (between networks and nodes) such as the detection RS configuration information, the measurement RS configuration information, the detection information, and the BH link switching instruction may be transmitted via the backhaul (wired backhaul or radio backhaul) by higher layer signaling (for example, a radio resource control (RRC) message).

### (Radio communication system)

Now, a configuration of a radio communication system according to one embodiment of the present disclosure will be described below. In this radio communication system, communication is performed using one or a combination of the radio communication methods according to the embodiments of the present disclosure.

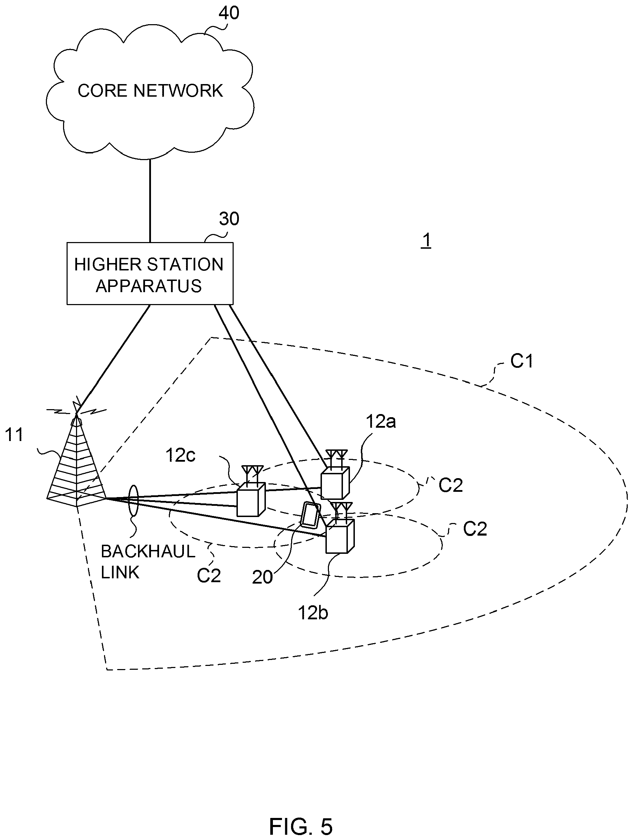

Fig. 5 is a diagram illustrating an example of a schematic configuration of a radio communication system according to one embodiment. A radio communication system 1 can employ at least one of carrier aggregation (CA) and/or dual connectivity (DC) to group a plurality of fundamental frequency blocks (component carriers) into one, where the system bandwidth (for example, 20 MHz) constitutes one unit.

Note that the radio communication system 1 may be referred to as LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), NR (New Radio), FRA (Future Radio Access), New-RAT (Radio Access Technology), and so on, or may be referred to as a system to implement these.

Further, the radio communication system 1 may support dual connectivity (multi-RAT dual connectivity (MR-DC)) between a plurality of RATs (Radio Access Technology). The MR-DC may include dual connectivity of LTE and NR (E-UTRA-NR Dual Connectivity (EN-DC)) in which a base station (eNB) of LTE (Evolved Universal Terrestrial Radio Access (E-UTRA)) becomes a master node (MN), and a base station (gNB) of NR becomes a secondary node (SN), dual connectivity of NR and LTE (NR-E-UTRA Dual Connectivity (NE-DC)) in which a base station (gNB) of NR becomes MN, and a base station (eNB) of the LTE (E-UTRA) becomes SN, and the like.

The radio communication system 1 includes a base station 11 that forms a macro cell C1 covering a relatively wide coverage, base stations 12 (12a to 12c) that are placed within the macro cell C1 and that form small cells C2, which are narrower than the macro cell C1. Further, a user terminal 20 is placed in the macro cell C1 and in each small cell C2. The arrangement, number and so on of cells and user terminal 20 are not limited to an aspect illustrated in the drawings.

The user terminal 20 can connect with both the base station 11 and the base stations 12. The user terminal 20 are assumed to use the macro cell C1 and the small cells C2 simultaneously using CA or DC. Further, the user terminal 20 may apply CA or DC using a plurality of cells (CCs).

Further, the radio communication system 1 may support dual connectivity (multi-RAT dual connectivity (MR-DC)) between a plurality of RATs (Radio Access Technology). The MR-DC may include dual connectivity of LTE and NR (E-UTRA-NR Dual Connectivity (EN-DC)) in which a base station (eNB) of LTE (E-UTRA) becomes a master node (MN), and a base station (gNB) of NR becomes a secondary node (SN), dual connectivity of NR and LTE (NR-E-UTRA Dual Connectivity (NE-DC)) in which a base station (gNB) of NR becomes MN, and a base station (eNB) of the LTE (E-UTRA) becomes SN, and the like. Further, the radio communication system 1 may support dual connectivity among a plurality of base stations in the same RAT (for example, dual connectivity (NR-NR Dual Connectivity (NN-DC))) in which both MN and SN become base stations (gNB) of NR).

Between the user terminal 20 and the base station 11, communication can be carried out using a carrier of a relatively low frequency band (for example, 2 GHz) and a narrow bandwidth (referred to as an "existing carrier", a "legacy carrier", and so on). Meanwhile, between the user terminal 20 and the base stations 12, a carrier of a relatively high frequency band (for example, 3.5 GHz, 5 GHz, and so on) and a wide bandwidth may be used, or the same carrier as that used in the base station 11 may be used. Note that the configuration of the frequency band for use in each base station is by no means limited to these.

Further, the user terminal 20 can perform communication in each cell using at least one of time division duplex (TDD) or frequency division duplex (FDD). Further, in each cell (carrier), a single numerology may be applied, or a plurality of different numerologies may be applied.

The numerology may be a communication parameter applied to at least one of transmission or reception of a certain signal or channel. The numerology may indicate, for example, at least one of subcarrier spacing, bandwidth, symbol length, cyclic prefix length, subframe length, TTI duration, the number of symbols per TTI, the radio frame configuration, particular filtering processing performed by the transceiver in frequency domains, particular windowing processing performed by a transceiver in time domains, and so on.

For example, for a certain physical channel, in the case where at least one of the subcarrier spacing of the constituent OFDM symbols and the number of OFDM symbols is different, it may be said that the numerology is different.

The base station 11 and the base station 12 (or between two base stations 12) may be connected by wire (for example, optical fiber, an X2 interface, and the like in compliance with the common public radio interface (CPRI)) or wirelessly. For example, when NR communication is used as a backhaul between base stations 11 and 12, the base station 11 corresponding to the upper station may be referred to as an IAB (Integrated Access Backhaul) donor, and the base station 12 corresponding to a relay station may be called an IAB node.

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point", and so on. Also, the base stations 12 are base stations having local coverages, and may be referred to as "small base stations", "micro base stations", "pico base stations", "femto base stations", "HeNBs (Home eNodeBs)", "remote radio heads (RRHs)", "transmission/reception points", and so on. Hereinafter the base stations 11 and 12 will be collectively referred to as "base stations 10", unless specified otherwise.

The user terminals 20 are terminals to support various communication schemes such as LTE, LTE-A, and 5G, and may be either mobile communication terminals (mobile stations) or stationary communication terminals (fixed stations).

In the radio communication system 1, as a radio access method, orthogonal frequency division multiple access (OFDMA) is applied to the downlink, and at least one of single carrier-frequency division multiple access (SC-FDMA) or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single-carrier communication method of reducing an interference between terminals by dividing, for each of terminals, a system bandwidth into bands composed of one or continuous resource blocks, and causing a plurality of terminals to use mutually different bands. Note that the uplink and downlink radio access schemes are not limited to the combinations of these, and other radio access schemes can be used as well.

In the radio communication system 1, a physical downlink shared channel (PDSCH), a physical broadcast channel (PBCH), a downlink control channel, and the like, which are shared by each user terminal 20, are used as the downlink channel. User data, upper layer control information, system information blocks (SIBs), and the like are transmitted in the PDSCH. Further, MIB (Master Information Block) is transmitted by PBCH.

The downlink control channels include a physical downlink control channel (PDCCH), an enhanced physical downlink control channel (EPDCCH), a physical control format indicator channel (PCFICH), a physical hybrid-ARQ indicator channel (PHICH), and so on. Downlink control information (DCI) including scheduling information of at least one of PDSCH or PUSCH, and the like are transmitted by the PDCCH.

Note that DCI that schedules reception of DL data may also be referred to as "DL assignment", and DCI that schedules transmission of UL data may also be referred to as "UL grant".

The use of PCFICH can cause the number of OFDM symbols used for the PDCCH to be transmitted. The PHICH may cause hybrid automatic repeat request (HARQ) delivery acknowledgement information (for example, such as retransmission control information, HARQ-ACK, and ACK/NACK) for the PUSCH to be transmitted. The EPDCCH is frequency-division-multiplexed with the PDSCH (downlink shared data channel) and used for transmitting DCI and the like, like the PDCCH.

In the radio communication system 1, an uplink shared channel (physical uplink shared channel (PUSCH)), which is used by each user terminal 20 on a shared basis, an uplink control channel (physical uplink control channel (PUCCH)), a random access channel (physical random access channel (PRACH)), and so on are used as uplink channels. User data, upper layer control information, and so on are communicated by the PUSCH. Also, in the PUCCH, downlink radio link quality information (channel quality indicator (CQI)), delivery acknowledgement information, scheduling requests (SRs), and so on are communicated. By means of the PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs), and so on are transmitted as downlink reference signals. Also, in the radio communication system 1, measurement reference signals (SRSs (Sounding Reference Signals)), demodulation reference signals (DMRSs), and so on are communicated as uplink reference signals. Note that, DMRSs may be referred to as "user terminal-specific reference signals (UE-specific reference signals)". Also, the reference signals to be communicated are by no means limited to these.

### (Base station)

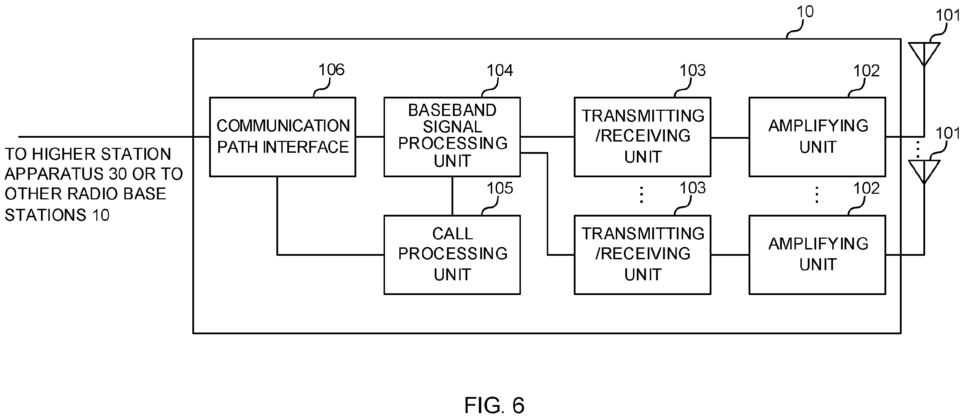

Fig. 6 is a diagram illustrating an example of an overall configuration of a base station according to one embodiment. A base station 10 has a plurality of transmitting/receiving antennas 101, amplifying units 102, transmitting/receiving units 103, a baseband signal processing unit 104, a call processing unit 105, and a communication path interface 106. Note that one or more transmitting/receiving antennas 101, amplifying units 102, and transmitting/receiving units 103 may be provided.

User data to be transmitted from the base station 10 to the user terminal 20 on the downlink is input from the higher station apparatus 30 to the baseband signal processing unit 104, via the communication path interface 106.

In the baseband signal processing unit 104, the user data is subjected to transmission processes, including a packet data convergence protocol (PDCP) layer process, division and coupling of user data, radio link control (RLC) layer transmission processes such as RLC retransmission control, medium access control (MAC) retransmission control (for example, an HARQ transmission process), scheduling, transport format selection, channel coding, an inverse fast Fourier transform (IFFT) process, and a precoding process, and so on and results of the processes will be forwarded to the transmitting/receiving unit 103. Furthermore, downlink control signals are also subjected to transmission processes such as channel coding and an inverse fast Fourier transform, and forwarded to the transmitting/receiving units 103.

Base band signals that are pre-coded and output from the baseband signal processing unit 104 on a per antenna basis are converted into a radio frequency band in the transmitting/receiving units 103, and then transmitted. The radio frequency signals having been subjected to frequency conversion in the transmitting/receiving units 103 are amplified in the amplifying units 102, and transmitted from the transmitting/receiving antennas 101. The transmitting/receiving unit 103 can be constituted by a transmitters/receiver, a transmitting/receiving circuit or transmitting/receiving apparatus that can be described based on general understanding of the technical field to which the present disclosure pertains. Note that a transmitting/receiving unit 103 may be structured as a transmitting/receiving unit in one entity, or may be constituted by a transmitting unit and a receiving unit.

Meanwhile, as for uplink signals, radio frequency signals that are received in the transmitting/receiving antennas 101 are each amplified in the amplifying units 102. The transmitting/receiving units 103 receive the uplink signals amplified in the amplifying units 102. The received signals are converted into the base band signal through frequency conversion in the transmitting/receiving units 103 and output to the baseband signal processing unit 104.

In the baseband signal processing unit 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing unit 105 performs call processing (such as configuration and releasing) of communication channels, manages the state of the base stations 10, and manages the radio resources.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber, an X2 interface, or the like that is in compliance with the common public radio interface (CPRI)).

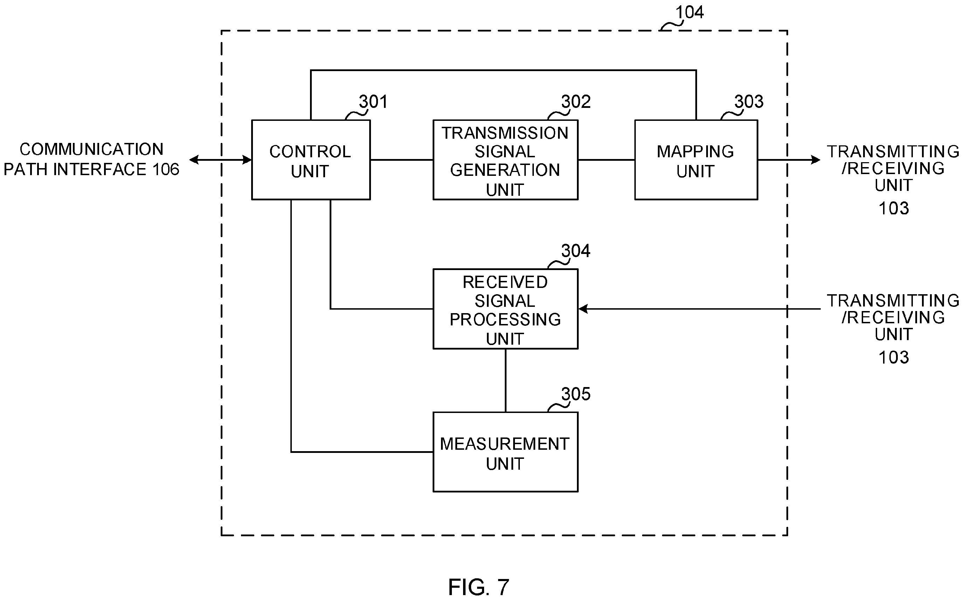

Fig. 7 is a diagram illustrating an example of a functional configuration of the base station according to one embodiment. Note that, although this example will primarily illustrate functional blocks that pertain to characteristic parts of the present embodiment, it may be assumed that the base station 10 has other functional blocks that are necessary for radio communication as well.

The baseband signal processing unit 104 at least has a control unit (scheduler) 301, a transmission signal generation unit 302, a mapping unit 303, a received signal processing unit 304, and a measurement unit 305. Note that these configurations have only to be included in the base station 10, and some or all of these configurations need not be included in the baseband signal processing unit 104.

The control unit (scheduler) 301 controls the whole of the base station 10. The control unit 301 can be constituted by a controller, a control circuit, or control apparatus that can be described based on general understanding of the technical field to which the present disclosure pertains.

For example, the control unit 301 controls generation of signals in the transmission signal generation unit 302, allocation of signals in the mapping unit 303, and so on. Furthermore, the control unit 301 controls the signal receiving process in the received signal processing unit 304, the measurements of signals in the measurement unit 305, and so on.

The control unit 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). Further, the control unit 301 controls generation of downlink control signals, downlink data signals and so on, based on the results of deciding whether or not retransmission control is necessary for uplink data signals, and so on.

The control unit 301 controls scheduling of synchronization signals (for example, PSS/SSS), downlink reference signals (for example, CRS, CSI-RS, DMRS), and so on.

The transmission signal generation unit 302 generates downlink signals (downlink control signals, downlink data signals, downlink reference signals, and so on) based on instructions from the control unit 301, and outputs these signals to the mapping unit 303. The transmission signal generation unit 302 can be constituted by a signal generator, a signal generation circuit, or a signal generation apparatus that can be described based on general understanding of the technical field to which the present disclosure pertains.

For example, the transmission signal generation unit 302 generates DL assignments, which report downlink data allocation information, and/or UL grants, which report uplink data allocation information, based on instructions from the control unit 301. DL assignments and UL grants are both DCI, and follow the DCI format. Also, the downlink data signals are subjected to the coding processing, the modulation processing, and so on, by using coding rates and modulation schemes that are determined based on, for example, channel state information (CSI) reported from each user terminal 20.

The mapping unit 303 maps the downlink signals generated in the transmission signal generation unit 302 to given radio resources based on an instruction from the control unit 301, and outputs these to the transmitting/receiving units 103. The mapping unit 303 can be constituted by a mapper, a mapping circuit, or mapping apparatus that can be described based on general understanding of the technical field to which the present disclosure pertains.

The received signal processing unit 304 performs receiving processes (for example, demapping, demodulation, decoding, and so on) of received signals that are input from the transmitting/receiving units 103. Here, the received signals include, for example, uplink signals transmitted from the user terminals 20 (uplink control signals, uplink data signals, uplink reference signals, and so on) . The received signal processing unit 304 can be constituted by a signal processor, a signal processing circuit, or a signal processing apparatus that can be described based on general understanding of the technical field to which the present disclosure pertains.

The received signal processing unit 304 outputs, to the control unit 301, information decoded by the receiving process. For example, when a PUCCH including an HARQ-ACK is received, the received signal processing unit 304 outputs this HARQ-ACK to the control unit 301. Also, the received signal processing unit 304 outputs the received signals and/or the signals after the receiving processes to the measurement unit 305.

The measurement unit 305 conducts measurements with respect to the received signals. The measurement unit 305 can be constituted by a measurer, a measurement circuit, or a measurement apparatus that can be described based on general understanding of the technical field to which the present disclosure pertains.

For example, the measurement unit 305 may perform radio resource management (RRM) measurement, channel state information (CSI) measurement, and the like based on the received signals. The measurement unit 305 may measure the received power (for example, reference signal received power (RSRP)), the received quality (for example, reference signal received quality (RSRQ)), the signal to interference plus noise ratio (SINR), the signal to noise ratio (SNR), the signal strength (for example, received signal strength indicator (RSSI)), the transmission path information (for example, CSI), and so on. The measurement results may be output to the control unit 301.

Note that the transmitting/receiving unit 103 may communicate with another node (for example, another base station 10) by using, for example, NR communication. The control unit 301 may perform control that functions as an IAB node (may be referred to as a radio communication apparatus). Signals, channels, and the like transmitted and received between the base station 10 and the user terminal 20 may be used in NR communication between nodes.

The control unit 301 may control transmission/reception using the transmitting/receiving unit 103 based on an instruction from an upper node (for example, another base station 10). For example, the control unit 301 may control the own base station 10 to function as the user terminal 20 described later, assuming that the upper node is another base station.

The control unit 301 may control the transmission/reception of the lower IAB node (for example, another base station 10). For example, the control unit 301 may control to transmit information (DCI and the like) for controlling transmission/reception of the lower IAB node, assuming that the lower IAB node is the user terminal 20 described later.

Further, the transmitting/receiving unit 103 may receive a first signal (for example, a set of detection RSs) that is periodically transmitted from a first node (for example, another base station 10) connected to the radio communication apparatus (for example, the base station 10) via a radio backhaul link (for example, IAB), and a second node (for example, yet another base station 10) that is not connected to the radio communication apparatus, and may receive the second signal (for example, a set of measurement RSs) at a timing different from that of the first signal. The control unit 301 may determine a candidate for the switching destination (at least one of the node or the beam (measurement RS)) of the radio backhaul link based on the first signal, and switch the radio backhaul link based on the second signal.

Further, the first signal includes a plurality of signals (for example, detection RSs) transmitted by using the plurality of beams, respectively, and the second signal may be a part of the plurality of signals.

Further, the transmitting/receiving unit 103 may receive the first configuration information for receiving the first signal (for example, detection RS configuration information), and receive the second configuration information for receiving the second signal (for example, measurement RS configuration information).

Further, the transmission period of the second signal (for example, the measurement signal transmission period) may be shorter than the transmission period of the first signal (for example, the detection signal transmission period).

Further, the control unit 301 may transmit a detection result (for example, detection information) of the first signal. The second signal may be transmitted according to the detection result (for example, request, trigger).

Further, the second configuration information may be configuration information of at least one of radio resource management, radio link monitoring, and beam failure recovery.

### (User terminal)

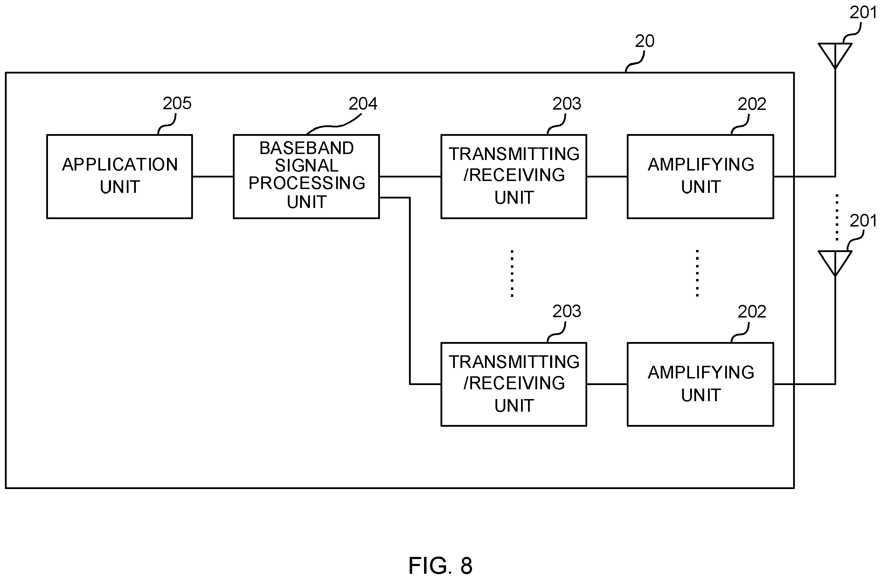

Fig. 8 is a diagram illustrating an example of an overall configuration of a user terminal according to one embodiment. A user terminal 20 has a plurality of transmitting/receiving antennas 201, amplifying units 202, transmitting/receiving units 203, a baseband signal processing unit 204, and an application unit 205. Note that one or more transmitting/receiving antennas 201, amplifying units 202, and transmitting/receiving units 203 may be provided.

Radio frequency signals that are received in the transmitting/receiving antennas 201 are amplified in the amplifying units 202. The transmitting/receiving units 203 receive the downlink signals amplified in the amplifying units 202. The transmitting/receiving unit 203 performs frequency conversion to convert a received signal to a base band signal, and outputs the base band signal to the baseband signal processing unit 204. The transmitting/receiving unit 203 can be constituted by a transmitters/receiver, a transmitting/receiving circuit, or a transmitting/receiving apparatus that can be described based on general understanding of the technical field to which the present disclosure pertains. Note that the transmitting/receiving unit 203 may be constituted as an integrated transmitting/receiving unit or may be constituted by a transmitting unit and a receiving unit.

The baseband signal processing unit 204 performs FFT processing, error correction decoding, retransmission control receiving process, and the like on the input base band signal. Downlink user data is forwarded to the application unit 205. The application unit 205 performs processes related to upper layers above the physical layer and the MAC layer, and so on. Further, in the downlink data, broadcast information may also be transferred to the application unit 205.

Meanwhile, uplink user data is input from the application unit 205 to the baseband signal processing unit 204. The baseband signal processing unit 204 performs a retransmission control transmission process (for example, an HARQ transmission process), channel coding, precoding, a discrete Fourier transform (DFT) process, an IFFT process and so on, and the result is forwarded to the transmitting/receiving unit 203.

The transmitting/receiving unit 203 converts a base band signal output from the baseband signal processing unit 204 into a signal in a radio frequency band, and transmits the signal. The radio frequency signals having been subjected to frequency conversion in the transmitting/receiving units 203 are amplified in the amplifying units 202, and transmitted from the transmitting/receiving antennas 201.

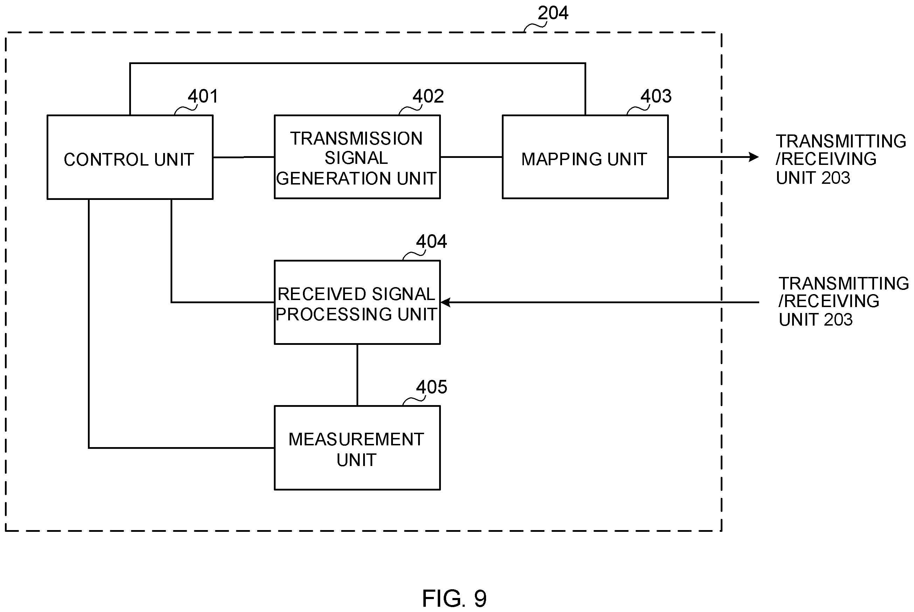

Fig. 9 is a diagram illustrating an example of a functional configuration of the user terminal according to one embodiment. Note that, although this example will primarily illustrate functional blocks that pertain to characteristic parts of the present embodiment, it may be assumed that the user terminal 20 have other functional blocks that are necessary for radio communication as well.

The baseband signal processing unit 204 provided in the user terminal 20 at least has a control unit 401, a transmission signal generation unit 402, a mapping unit 403, a received signal processing unit 404 and a measurement unit 405. Note that these configurations have only to be included in the user terminal 20, and some or all of the configurations need not be included in the baseband signal processing unit 204.

The control unit 401 controls the whole of the user terminal 20. The control unit 401 can be constituted by a controller, a control circuit, or a control apparatus that can be described based on general understanding of the technical field to which the present disclosure pertains.

The control unit 401, for example, controls generation of signals in the transmission signal generation unit 402, the allocation of signals in the mapping unit 403, and so on. Furthermore, the control unit 401 controls the signal receiving process in the received signal processing unit 404, the measurements of signals in the measurement unit 405, and so on.

The control unit 401 acquires the downlink control signals and downlink data signals transmitted from the base station 10, via the received signal processing unit 404. The control unit 401 controls generation of uplink control signals and/or uplink data signals based on the results of deciding whether or not retransmission control is necessary for the downlink control signals and/or downlink data signals, and so on.

The control unit 401 may use digital BF (for example, precoding) by the baseband signal processing unit 204 and/or analog BF (for example, phase rotation) by the transmitting/receiving units 203 to form a Tx beam and/or a reception beam.

Further, when the control unit 401 acquires various information reported from the base station 10 from the received signal processing unit 404, the control unit 401 may update the parameter used for control based on the information.

The transmission signal generation unit 402 generates uplink signals (uplink control signals, uplink data signals, uplink reference signals, and the like) based on instructions from the control unit 401, and outputs these signals to the mapping unit 403. The transmission signal generation unit 402 can be constituted by a signal generator, a signal generation circuit, or a signal generation apparatus that can be described based on general understanding of the technical field to which the present disclosure pertains.

For example, the transmission signal generation unit 402 generates uplink control signals such as delivery acknowledgement information, channel state information (CSI), and so on, based on an instruction from the control unit 401. Also, the transmission signal generation unit 402 generates uplink data signals based on instructions from the control unit 401. For example, when a UL grant is included in a downlink control signal that is reported from the base station 10, the control unit 401 instructs the transmission signal generation unit 402 to generate an uplink data signal.

The mapping unit 403 maps the uplink signals generated in the transmission signal generation unit 402 to radio resources based on an instruction from the control unit 401, and output the result to the transmitting/receiving unit 203. The mapping unit 403 can be constituted by a mapper, a mapping circuit, or a mapping apparatus that can be described based on general understanding of the technical field to which the present disclosure pertains.

The received signal processing unit 404 performs receiving processes (for example, demapping, demodulation, decoding, and so on) of received signals that are input from the transmitting/receiving units 203. Here, the received signals include, for example, downlink signals (downlink control signals, downlink data signals, downlink reference signals, and so on) that are transmitted from the base station 10. The received signal processing unit 404 can be constituted by a signal processor, a signal processing circuit, or a signal processing apparatus that can be described based on general understanding of the technical field to which the present disclosure pertains. Also, the received signal processing unit 404 can constitute the receiving unit according to the present disclosure.

The received signal processing unit 404 outputs the decoded information that is acquired through the receiving process to the control unit 401. The received signal processing unit 404 outputs, for example, broadcast information, system information, RRC signaling, DCI, and so on, to the control unit 401. Also, the received signal processing unit 404 outputs the received signals and/or the signals after the receiving processes to the measurement unit 405.

The measurement unit 405 conducts measurements with respect to the received signals. The measurement unit 405 can be constituted by a measurer, a measurement circuit or measurement apparatus that can be described based on general understanding of the technical field to which the present disclosure pertains.

For example, the measurement unit 405 may perform RRM measurements, CSI measurements, and so on based on the received signals. The measurement unit 405 may measure the received power (for example, RSRP), the received quality (for example, RSRQ, SINR, SNR, or the like), the signal strength (for example, RSSI), transmission path information (for example, CSI), and so on. The measurement results may be output to the control unit 401.

### (Hardware configuration)

Note that the block diagrams that have been used to describe the above embodiments illustrate blocks in functional units. These functional blocks (components) may be implemented in arbitrary combinations of at least one of hardware or software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses. The functional block may be implemented by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (configuration unit) that causes transmission to function may be referred to as a transmitting unit, a transmitter, or the like. In any case, as described above, the implementation method is not particularly limited.

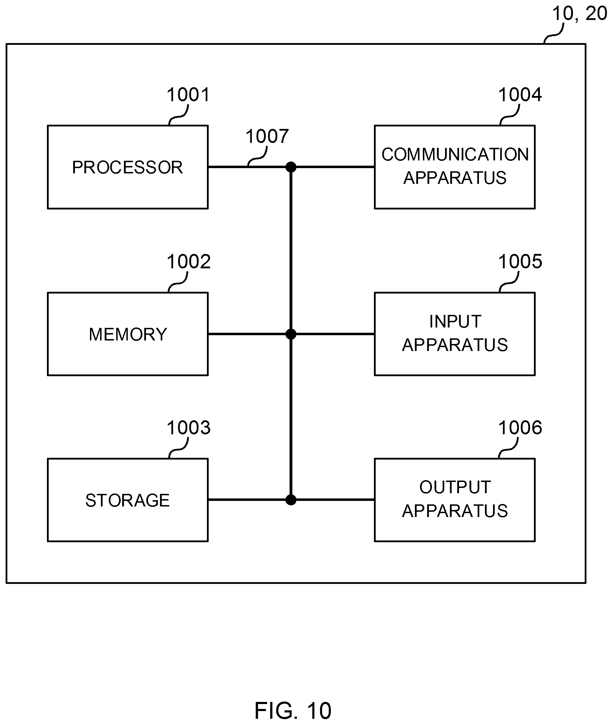

For example, the base station, the user terminal, and so on according to one embodiment of the present disclosure may function as a computer that executes the processing of the radio communication method of the present disclosure. Fig. 10 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as apparatus, circuit, device, section, and unit can be replaced with each other. The hardware configuration of the base station 10 and the user terminal 20 may be configured to include one or more of each apparatus illustrated in the drawings, or may be configured not to include some apparatuses.

For example, although only one processor 1001 is illustrated, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by, for example, reading given software (program) on hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, a computing apparatus, a register, and so on. For example, the above-described baseband signal processing unit 104 (204), call processing unit 105, and so on may be implemented by the processor 1001.

Furthermore, the processor 1001 reads programs (program codes), software modules, or data, from at least one of the storage 1003 or the communication apparatus 1004, into the memory 1002, and executes various processing according to these. As for the programs, programs to allow computers to execute at least part of the operations of the above-described embodiments may be used. For example, the control unit 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of read only memory (ROM), erasable programmable ROM (EPROM), electrically EPROM (EEPROM), random access memory (RAM) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) and so on), a digital versatile disc, or a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", and the like. The communication apparatus 1004 may be configured to include a high frequency switch, a duplexer, a filter, a frequency synthesizer and so on in order to realize, for example, at least one of frequency division duplex (FDD) or time division duplex (TDD). For example, the above-described transmitting/receiving antennas 101 (201), amplifying units 102 (202), transmitting/receiving units 103 (203), communication path interface 106 and so on may be implemented by the communication apparatus 1004. The transmitting/receiving unit 103 (203) may be implemented in a physically or logically separated manner by the transmitting unit 103a (203a) and the receiving unit 103b (203b) .

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated configuration (for example, a touch panel).

Furthermore, these apparatuses, including the processor 1001, the memory 1002, and so on are connected by the bus 1007 for information communication. The bus 1007 may include a single bus, or may include different buses for each pair of apparatuses.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Modified examples)

Note that the terminology described in the present disclosure and the terminology that is needed to understand the present disclosure may be replaced with other terms that convey the same or similar meanings. For example, channel, symbol, and signal (signal or signaling) may be replaced with each other. Also, "signals" may be replaced by "messages". A reference signal may be abbreviated as an "RS", and may be referred to as a "pilot", a "pilot signal" and so on, depending on which standard applies. Furthermore, a "component carrier (CC)" may be referred to as a "cell", a "frequency carrier", a "carrier frequency" and so on.

A radio frame may be composed of one or more periods (frames) in the time domain. Each of one or more periods (frames) constituting a radio frame may be referred to as a "subframe". Furthermore, a subframe may include one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame configuration, specific filtering processing to be performed by a transceiver in the frequency domain, specific windowing processing to be performed by a transceiver in the time domain and so on.

A slot may be composed of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

A slot may include a plurality of mini slots. Each mini slot may include one or more symbols in the time domain. Also, a mini slot may be referred to as a "subslot". Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

Each of the radio frame, the subframe, the slot, the mini slot, and the symbol represents a time unit at the time of transmitting a signal. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)", or a plurality of consecutive subframes may be referred to as a "TTI", or one slot or one mini slot may be referred to as a "TTI". That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be referred to as usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a usual TTI, a subframe, or the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe or one TTI in length. One TTI, one subframe, and the like each may be composed of one or more resource blocks.

Note that one or more RBs may be referred to as a "physical resource block (PRB (Physical RB))", a "subcarrier group (SCG)", a "resource element group (REG)", a "PRB pair", an "RB pair" and so on.

Furthermore, a resource block may be composed of one or more resource elements (REs). For example, one RE may be a radio resource field of one subcarrier and one symbol.

The bandwidth part (BWP) (which may be referred to as partial bandwidth or the like) may represent a subset of consecutive common RB (common resource blocks) for a certain numerology in a certain carrier. Here, the common RB may be specified by the index of the RB based on a common reference point of the carrier. The PRB may be defined in a certain BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be replaced with "BWP".

Note that the configurations of radio frames, subframes, slots, mini slots, symbols, and the like described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Also, the information, the parameters, and the like described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (physical uplink control channel (PUCCH), physical downlink control channel (PDCCH), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from upper layers to lower layers and a direction from lower layers to upper layers. Information, signals, and the like may be input and output via a plurality of network nodes.

The information, signals, and the like that have been input and/or output may be stored in a specific location (for example, in a memory), or may be managed in a control table. The information, signals and so on to be input and/or output can be overwritten, updated, or appended. The information, signals and so on that are output may be deleted. The information, signals, and the like that are input, may be transmitted to other apparatuses.

The reporting of information is by no means limited to the aspects/embodiments described in the present disclosure, and may be performed using other methods. For example, the reporting of information may be implemented by physical layer signaling (for example, downlink control information (DCI), uplink control information (UCI)), higher layer signaling (for example, radio resource control (RRC) signaling, broadcast information (master information block (MIB), system information block (SIB), and the like), and medium access control (MAC) signaling), other signals or combinations of these.

Note that physical layer signaling may be referred to as "L1/L2 (Layer 1/Layer 2) control information (L1/L2 control signals)", "L1 control information (L1 control signal)" and so on. Also, RRC signaling may be referred to as "RRC messages", and can be, for example, an RRC connection setup message, RRC connection reconfiguration message, and so on. Also, MAC signaling may be reported using, for example, MAC control elements (MAC CEs (Control Elements)) .

Further, reporting of given information (for example, reporting of information to the effect that "X holds") does not necessarily have to be sent explicitly, and may be sent implicitly (for example, by not reporting this given information, or by reporting another piece of information).

Decisions may be made in values represented by one bit (0 or 1), may be made in Boolean values that represent true or false, or may be made by comparing numerical values (for example, comparison with a given value).

Regardless of whether referred to as "software", "firmware", "middleware", "microcode" or "hardware description language", or called by other names, software should be interpreted broadly to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and radio technologies (infrared radiation, microwaves, and the like), at least one of these wired technologies and radio technologies are also included in the definition of communication media.

The terms "system" and "network" as used in the present disclosure are used interchangeably.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into a plurality of smaller areas, and each smaller area can provide communication services through base station subsystems (for example, indoor small base stations (remote radio heads (RRHs))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as transmitting apparatus, receiving apparatus, communication apparatus and so on. Note that at least one of the base station or the mobile station may be a device mounted on a moving object, a moving object itself, or the like. The moving object may be a transportation (for example, a car, an airplane and so on), an unmanned moving object (for example, a drone, an autonomous car and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Further, the base stations in the present disclosure may be replaced with the user terminal. For example, each aspect/embodiment of the present disclosure may be applied to a configuration in which communication between the base station and the user terminal is replaced by communication among a plurality of user terminal (which may be referred to as, for example, D2D (Device-to-Device), V2X (Vehicle-to-Everything), and so on). In this case, the user terminal 20 may have the functions of the base station 10 described above. In addition, the wording such as "up" and "down" may be replaced with the wording corresponding to the terminal-to-terminal communication (for example, "side"). For example, an uplink channel, a downlink channel, and so on may be replaced with a side channel.

Likewise, the user terminal in the present disclosure may be replaced with the base station. In this case, the base station 10 may have the functions of the user terminal 20 described above.

In the present disclosure, an operation performed by a base station may be performed by an upper node thereof in some cases. In a network composed of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments described in the present disclosure may be used individually or in combinations, which may be switched depending on the mode of implementation. Further, the order of a processing procedure, a sequence, a flowchart, and so on of each aspect/embodiment described in the present disclosure may be changed as long as there is no inconsistencies. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), New Radio(NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods and a next generation system expanded based on these methods, and the like. Further, a plurality of systems may be combined and applied (for example, a combination of LTE or LTE-A and 5G, or the like).

The phrase "based on" as used in the present disclosure does not mean "based only on", unless otherwise specified. In other words, the phrase "based on" means both "based only on" and "based at least on".

Reference to elements with designations such as "first", "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determine" as used herein may be interpreted to mean making a determinations related to receiving (for example, receiving information), transmitting (for example, transmitting information), inputting, outputting, accessing (for example, accessing data in a memory), and the like.

In addition, "determine" as used herein may be interpreted to mean making determinations related to resolving, selecting, choosing, establishing, comparing, and the like. In other words, "determine" as used herein may be interpreted to mean making determinations related to some operation.

In addition, "determining" as used herein may be replaced with "assuming", "expecting", "considering", and the like.

The term "maximum transmission power" described in the present disclosure may mean the maximum value of transmission power, the nominal UE maximum transmission power, or the rated UE maximum transmission power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in a radio frequency domain, a microwave domain, and an optical (both visible and invisible) domain, or the like.

In the present disclosure, the phrase "A and B are different" may mean "A and B are different from each other". Note that the term may mean that "each of A and B is different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of exemplification and explanation, and should by no means be construed to limit the invention according to the present disclosure in any way.

## Claims

1. A radio communication apparatus comprising:
a receiving unit that receives a first signal periodically transmitted from a first node connected to the radio communication apparatus via a radio backhaul link and a second node not connected to the radio communication apparatus, and receives a second signal at a timing different from that of the first signal; and
a control unit that determines a candidate of a switching destination of the radio backhaul link based on the first signal and switches the radio backhaul link based on the second signal.

2. The radio communication apparatus according to claim 1, wherein
the first signal includes a plurality of signals transmitted by using a plurality of beams, respectively, and
the second signal is a part of the plurality of signals.

3. The radio communication apparatus according to claim 1 or claim 2, wherein
the receiving unit receives first configuration information for receiving the first signal and receives the second configuration information for receiving the second signal.

4. The radio communication apparatus according to any one of claims 1 to 3, wherein
a transmission period of the second signal is shorter than a transmission period of the first signal.

5. The radio communication apparatus according to any one of claims 1 to 4, wherein
the control unit transmits a detection result of the first signal, and
the second signal is transmitted according to the detection result.

6. A radio communication method of a radio communication apparatus, comprising:
receiving a first signal periodically transmitted from a first node connected to the radio communication apparatus via a radio backhaul link and a second node not connected to the radio communication apparatus;
receiving a second signal having a shorter time than the first signal at a timing different from that of the first signal;
determining a candidate of a switching destination of the radio backhaul link based on the first signal; and
switching the radio backhaul link based on the second signal.
